# EUROPEAN PATENT APPLICATION

(11) **EP 1 765 038 A2**
(43) Date of publication of application: **21.03.2007**
(21) Application number: 06254653.6
(22) Date of filing: 07.09.2006
(51) Int. Cl.: H05B 33/08

(54) **Light assembly with rechargeable battery**

(30) Priority: 14.09.2005 CN 200510032162
(71) Applicant: Hung, Pao-Chuang, Sanchong City, Taipei County 241 (TW)
(72) Inventor: Hung, Pao-Chuang, Sanchong City, Taipei County 241 (TW)
(74) Representative: Brown, Michael Stanley

(57) **Abstract**

A light assembly (1) includes a charge/discharge unit (11) which is electrically connected to a control unit (12) and a switch (13) is electrically connected to the control unit (12) so as to control the output of the control unit (12). A driving unit (14) is electrically connected to the control unit (12) and the charge/discharge unit (11) so as to drive a light source (15). A connection port (17) is electrically connected to the charge/discharge unit (11), the control unit (12), the driving unit (14) and the light source (15) so as to be connected with an electric appliance such as an energy generating device (2).

## Description

### (1) FIELD OF THE INVENTION

The present invention relates to a light assembly which is able to storage power and provides electric power to another electric appliance.

### (2) DESCRIPTION OF THE PRIOR ART

A conventional light assembly such as flashlight is powered by batteries which have to be effective and are installed correctly in the flashlight. Once the batteries are not timely installed in the flashlight or the batteries are not functioned, the flashlight cannot operate as desired. Some batteries are rechargeable and can be charged when not in use. However, the rechargeable batteries relies on the power supply which may not be easily have when traveling to a place without electric power supply facilities.

The present invention intends to provide a chargeable light assembly which stores electric power therein and is able to supply electric power to another electric appliance.

### SUMMARY OF THE INVENTION

The present invention relates to a light assembly which comprises a charge/discharge unit electrically connected to a control unit which is electrically connected to a switch which switches the outputs from the control unit. A driving unit is electrically connected to the control unit and the charge/discharge unit and drives a light source. A connection port is electrically connected to the charge/discharge unit, the control unit, the driving unit and the light source so as to be connected with an electric appliance such as an energy generating device.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the circuit diagram of the light assembly of the present invention;
Fig. 2 is an exploded view to show the light assembly of the present invention and an electric appliance;
Fig. 3 shows that the light assembly of the present invention is electrically connected to the electric appliance in Fig. 2;
Figs. 4 to 7 show four different second terminals of the present invention, and

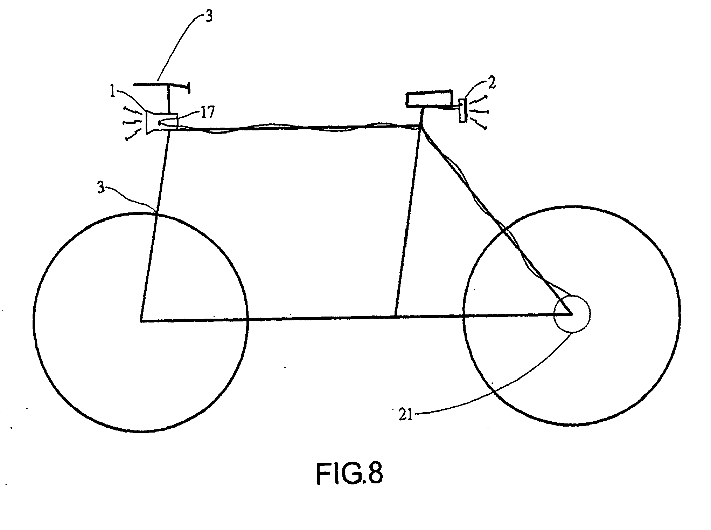

Fig. 8 shows that the light assembly is used on a bicycle.

### DETAILED DESCRIPTION OF THE PREFERRED EMBODIMENTS

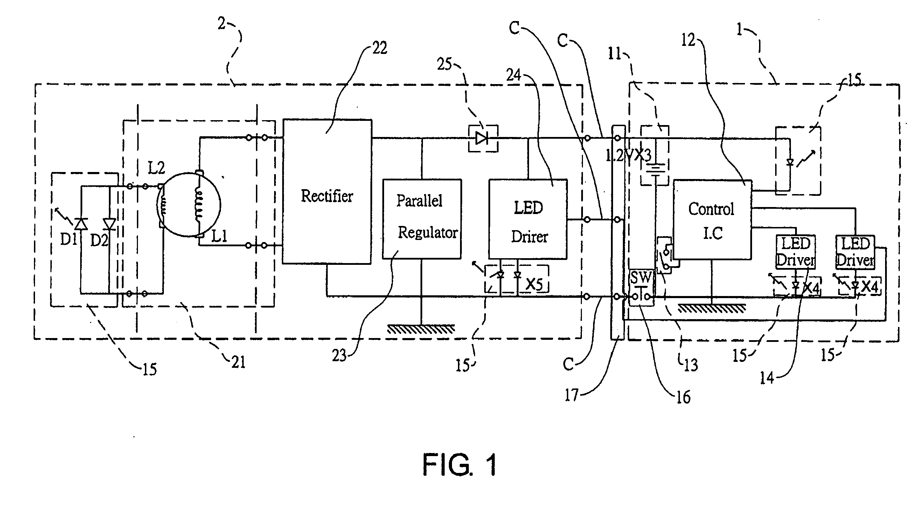

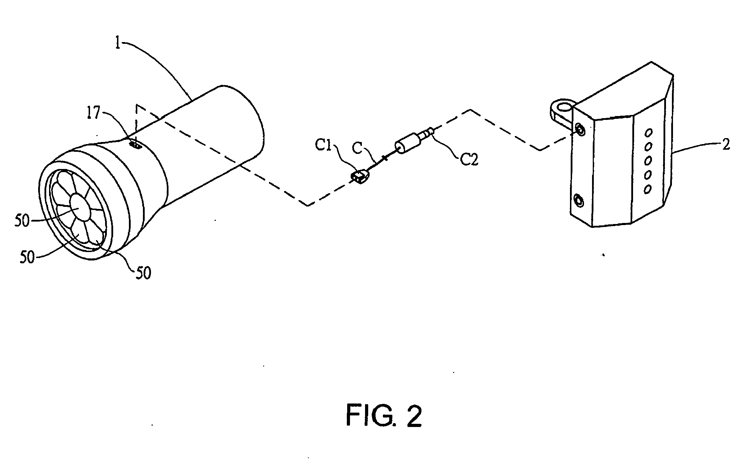

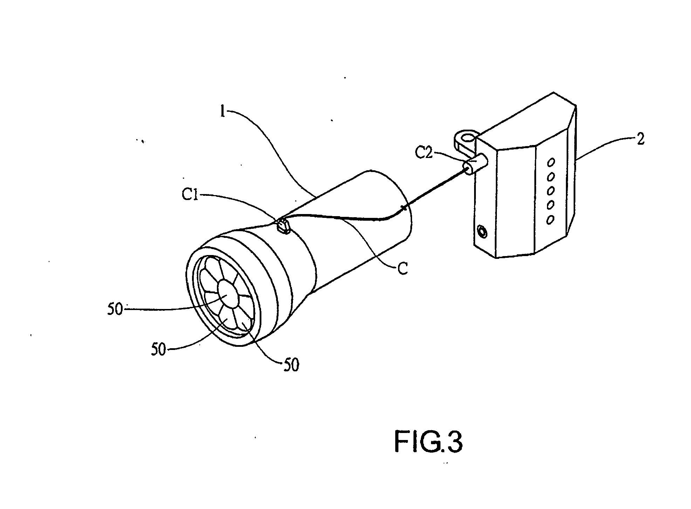

Referring to Figs. 1 to 3, the light assembly (1) of the present invention comprises a charge/discharge unit (11) such as a rechargeable battery, pad or capacitor which is able to store electric power and provide the electric power to other electric parts. A control unit (12) is electrically connected to the charge/discharge unit (11) which provides the electric power to the control unit (12) which is electrically connected to a switch (13) which provides an option to the output (0, 1, high or low voltage) from the control unit (12). A driving unit (14) is electrically connected to the control unit (12) and the charge/discharge unit (11), the driving unit (14) receives commands from the control unit (12) so as to output signals. A light source (15) such as a Light Emitting diode or light bulb, is electrically connected to the driving unit (14) and driven by the driving unit (14). The light source (15) can be set to flash or any known way. If the number of the light source (15) is multiple, the user can operate the switch (13) to control some or whole of the light sources (15) to perform as desired.

A connection port (17) is electrically connected to the charge/discharge unit (11), the control unit (12), the driving unit (14) and the light source (15). An electric appliance such as a cellular phone, MP3 player, PDA, or an energy generating device (2) can also be connected with the connection port (17). The electric power stored in the charge/discharge unit (11) provides power to the control unit (12), the driving unit (14) and the light source (15). If the voltage output by the energy generating device (2) is not compatible to the electric appliance, a voltage regulation device can be used to regulate the voltage for the electric appliance.

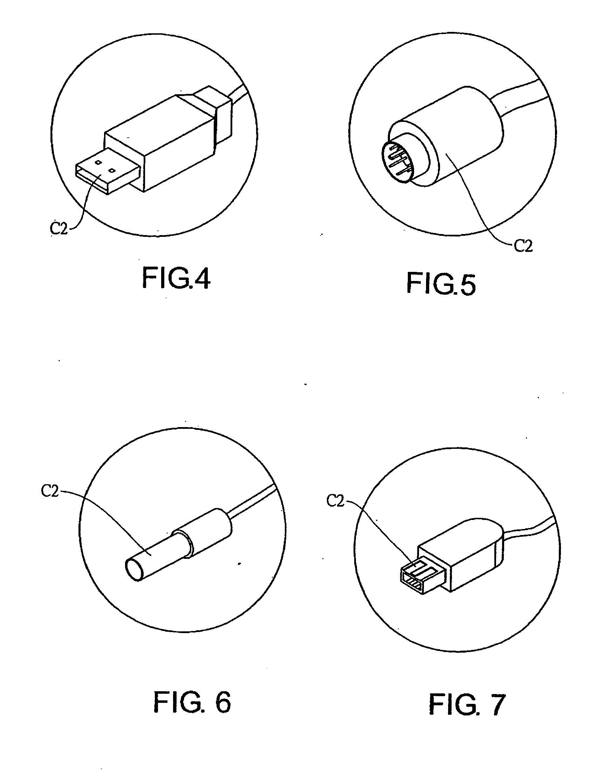

The connection port (17) includes a conductive line "C" which includes a first terminal "C1" and a second terminal "C2". The first terminal "C1" may have a magnetic unit (not shown) and the second terminal "C2" can be any known types of plugs such as a USB connector as shown in Fig. 4, a PS2 connector as shown in Fig. 5, a FireWire as shown in Fig. 7, and a tubular plug shown in Fig. 6.

An ON/OFF switch (16) is electrically connected between the charge/discharge unit (11), the control unit (12), the driving unit (14), the light source (15) and the connection port (17). The ON/OFF switch (16) can be a magnetic switch or a touch switch. When the first terminal "C1" is connected with the connection port (17), the magnetic switch is activated by the magnetic unit, the charge/discharge unit (11), the control unit (12), the driving unit (14), the light source (15) and the conductive line "C" is in a close circuit. This prevents circuit short by foreign object being in contact with the connection port (17).

The electric appliance can be an energy generating device (2) which includes an alternative current part and a direct current part, wherein the alternative current part includes an electric power generator (21) which is electrically connected with an indication light source (15) to indicate the status of the electric power generator (21). The indication light source (15) may include two light members of opposite polarities which light up at positive and negative half cycle.

The direct current part includes a current rectifier unit (22), a voltage regulation unit (23), a driving member (24) and a light source (15). The current rectifier unit (22) transfers the alternative current from the alternative current part, such as the electric power generator (21), into direct current, the voltage regulation unit (23) is electrically connected to the current rectifier unit (22) so as to maintain a stable voltage of the direct current. The driving member (24) is electrically connected to the voltage regulation unit (23) so as to drive the light source (15) to flash (for example). The light source (15) can be located in a tail light of a bicycle. A one-way member (25) such as a diode is connected between the driving member (24) and the voltage regulation unit (23) to prevent power feedback. The direct current part can be composed of computer interface device and the energy generating device (2) can be a power converter.

The light assembly (1) can be use on a flashlight or a bicycle such as the electric power generator (21) is connected on a bicycle and the light source (15) is a front light of the bicycle. The second terminal "C2" such as the USB connector, the PS2 connector, the FireWire, and the tubular plug can be connected to computer.

While we have shown and described the embodiment in accordance with the present invention, it should be clear to those skilled in the art that further embodiments may be made without departing from the scope of the present invention.

## Claims

1. A light assembly (1) comprising:
a charge/discharge unit (11);
a control unit (12) electrically connected to the charge/discharge unit (11);
a switch (13) electrically connected to the control unit (12);
a driving unit (14) electrically connected to the control unit (12) and the charge/discharge unit (11);
a light source (15) electrically connected to the driving unit (14) and driven by the driving unit (14), and
a connection port (17) electrically connected to the charge/discharge unit (11), the control unit (12), the driving unit (14) and the light source (15).

2. The assembly as claimed in claim 1, wherein an ON/OFF switch (16) is electrically connected between the charge/discharge unit (11), the control unit (12), the driving unit (14), the light source (15) and the connection port (17).

3. The assembly as claimed in claim 1, wherein the connection port (17) includes a conductive line "C".

4. The assembly as claimed in claim 2, wherein the connection port (17) includes a conductive line "C".

5. The assembly as claimed in claim 3, wherein the conductive line "C"includes a first terminal "C1" and a second terminal "C2".

6. The assembly as claimed in claim 5, wherein the ON/OFF switch (16) is a magnetic switch and the first terminal "C1" has a magnetic unit.

7. The assembly as claimed in claim 5, wherein the second terminal "C2" is connected to an electric appliance and includes a plug.

8. The assembly as claimed in claim 7, wherein the electric appliance is an energy generating device (2).

9. The assembly as claimed in claim 8, wherein the energy generating device (2) includes an alternative current part and a direct current part.

10. The assembly as claimed in claim 9, wherein the alternative current part includes an electric power generator (21).

11. The assembly as claimed in claim 9, wherein the direct current part includes a current rectifier unit (22) and a voltage regulation unit (23), the current rectifier unit (22) transfers the alternative current from the alternative current part into direct current, the voltage regulation unit (23) is electrically connected to the current rectifier unit (22) so as to maintain a stable voltage of the direct current.

12. The assembly as claimed in claim 9, wherein the direct current part is composed of computer interface device.

13. The assembly as claimed in claim 8, wherein the energy generating device (2) is a power converter.

14. The assembly as claimed in claim 10, wherein the electric power generator (21) is connected on a bicycle.

15. The assembly as claimed in claim 1, wherein the light source (15) is a front light of a bicycle;

16. The assembly as claimed in claim 11, wherein the voltage regulation unit (23) includes a driving member (24) which drives light source (15).

17. The assembly as claimed in claim 16, wherein the light source (15) is located in a tail light of a bicycle.
